# EUROPEAN PATENT APPLICATION

(11) **EP 2 792 403 A2**
(43) Date of publication of application: **22.10.2014**
(21) Application number: 14163156.4
(22) Date of filing: 02.04.2014
(51) Int. Cl.: B01F 3/04, B01F 11/02, B01F 7/16

(54) **A wine aerator and method of aerating wine**

(30) Priority: 15.04.2013 US 201313862774
(71) Applicant: Cheng, Peter Shu-Chun, Hong Kong (CN)
(72) Inventor: Cheng, Peter Shu-Chun, Hong Kong (CN)
(74) Representative: Serjeants LLP

(57) **Abstract**

A wine aerator 10 includes a container 12 having walls bounding an interior compartment 14. The compartment 14 has an open condition in which a volume of a type of wine 20 to be aerated is admitted to partially fill the compartment 14, and a closed condition for hermetically sealing the wine 20 in the compartment 14. The remainder of the compartment 14 contains a volume of air 18. A plurality of indicators 46, 48, 50 are provided on the container 12 for visually indicating different air/wine volume ratios based on the type of wine 20 in the compartment 14. An agitator 30 agitates the hermetically sealed wine 20 with a selected one of the ratios for a predetermined time to aerate the wine 20.

## Description

### FIELD OF THE DISCLOSURE

The present disclosure relates generally to a wine aerator and to a method of aerating wine.

### BACKGROUND

Aeration of liquids is a process by which air is circulated through, mixed with, or dissolved in, a liquid. In wine tasting, many methods are used to aerate wine and bring out the wine aroma or bouquet, including swirling the wine in a glass, using a decanter to increase exposure to air, simply waiting a sufficient time for the wine to breathe, or employing specialized wine aerator devices to mix air into the wine.

There are many different styles of specialized wine aerator devices. Injection-style aerator devices work by the Venturi effect and Bernoulli's principle by featuring a funnel or wide tube that narrows. While injection-style, handheld and in-bottle, aerator devices are currently very common, decanter-top aerator devices are also available. Sieve-style decanter-top funnels have long been used for aeration and catching sediment. Boxed wine and vacuumed sealed wine can be aerated through the use of single glass aerating devices, some of which have movable spouts that adjust to the different sizes and shapes of wine glasses.

Yet, despite the many styles of such aerator devices, full wine aeration tends to take a long time, and a single device is not suitable for all types of wines. For example, some wine experts have judged injection-style aerator devices as being too harsh for thinner skinned varietals, such as Pinot Noir or Gamay. As a result, many wine experts have resorted to using multiple aerator devices, each suited for a particular wine. Yet, this solution is typically beyond what is necessary or appropriate for most people.

Accordingly, there is a need to provide a universal wine aerator that can quickly achieve a full aeration, and that can be customized and used for aerating a wide variety of different types of wines.

### BRIEF DESCRIPTION OF THE FIGURES

The accompanying figures, where like reference numerals refer to identical or functionally similar elements throughout the separate views, together with the detailed description below, are incorporated in and form part of the specification, and serve to further illustrate embodiments of concepts that include the claimed invention, and explain various principles and advantages of those embodiments.
FIG. 1 is a partially schematic view of a wine aerator in accordance with one embodiment of this invention.
FIG. 2 is a front elevational view of visual indicators for use with the embodiment of FIG. 1.
FIG. 3 is a partially schematic view of a wine aerator in accordance with another embodiment of this invention.
FIG. 4 is a front elevational view of visual indicators for use with the embodiment of FIG. 3.
FIG. 5 is a partially schematic view of a wine aerator prior to use in accordance with still another embodiment of this invention.
FIG. 6 is a partially schematic view of the embodiment of FIG. 5 in use.

### DETAILED DESCRIPTION

In accordance with one feature of this invention, a wine aerator comprises a container having walls bounding an interior compartment. The compartment has an open condition in which a volume of a type of wine to be aerated is admitted to partially fill the compartment, and a closed condition for hermetically sealing the wine in the compartment. The remainder of the compartment contains a volume of air. A plurality of indicators are provided on the container for visually indicating different air/wine volume ratios based on the type of wine in the compartment. An agitator, e.g., an ultrasonic transducer, a mechanical stirrer, and the like, agitates the hermetically sealed wine with a selected one of the ratios for a predetermined time to aerate the wine. Thus, different types of wines are agitated with different air/wine volume ratios to customize the aerator to the wine being aerated.

The indicators are spaced apart at different elevations along an upright axis. In one embodiment, the container has a wall, e.g., a top wall, movable along the upright axis among the elevations to select one of the ratios. The indicators are wine type lines for visually indicating the different elevations to which the top wall is to be moved based on the type of wine in the compartment. In another embodiment, the air/wine volume ratio is adjusted not by moving a top wall, but by filling the compartment with the wine up to different wine levels along the upright axis, each wine level corresponding to a different type of the wine, to select one of the ratios.

In accordance with another feature of this invention, a method of aerating wine, is performed by admitting a volume of a type of wine to be aerated into an interior compartment of a container to partially fill the compartment, the remainder of the compartment containing a volume of air; by hermetically sealing the wine in the compartment; by visually indicating different air/wine volume ratios based on the type of wine in the compartment with a plurality of indicators on the container; and by agitating the hermetically sealed wine with a selected one of the ratios for a predetermined time to aerate the wine.

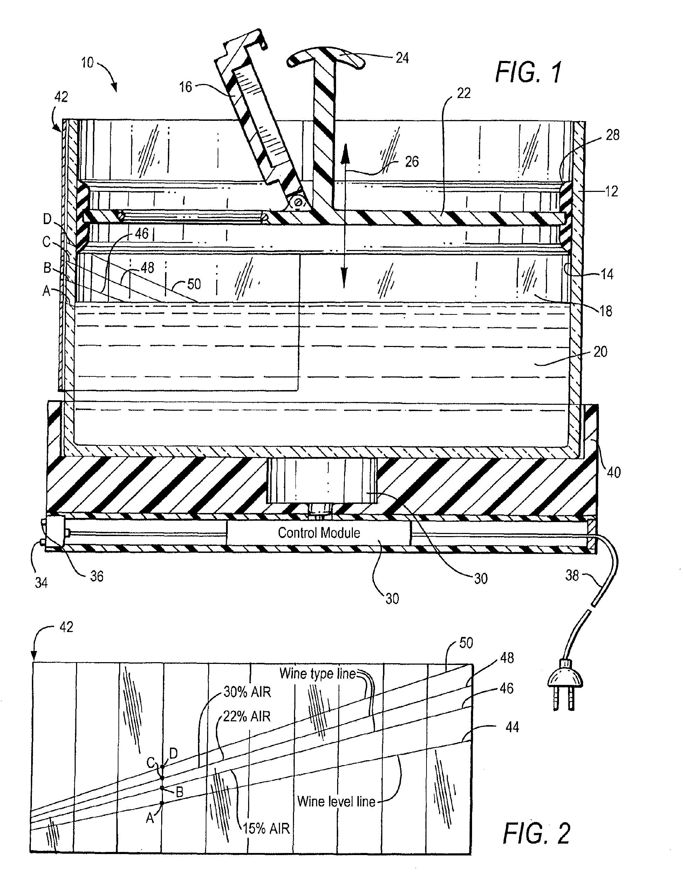

Turning now to the drawings, reference numeral 10 in FIG. 1 generally identifies one embodiment of a wine aerator. The aerator 10 includes a generally cylindrical container 12 having walls bounding an interior compartment 14. An inlet 16 is movable from a closed position to an open position in which a quantity or volume of a type of wine 20 to be aerated is admitted to partially fill the compartment 14 up to a wine level (marked, as described below, as point "A" on wine level line 44 in FIG. 2). The remainder of the compartment 14 contains a volume of air 18. A plurality of indicators configured as wine type lines 46, 48, 50 in FIG. 2 are provided on the container 12 for visually indicating different air/wine volume ratios based on the type of wine in the compartment 14, as described in detail below.

In the embodiment of FIG. 1, one of the container walls, e.g., a generally circular, planar, top wall 22, is movable to a selected elevation (marked, as described below, as vertically spaced-apart points "B", "C", or "D") to change the volume of the air 18 in the compartment 14 to a changed air volume based on the type of the wine 20 therein. A handle 24, which is connected to the top wall 22, is gripped by a user to manually move the top wall 22 up and down along an upright axis in the directions of the double-headed arrow 26. The aforementioned inlet 16 is a door mounted on the top wall 22 for pivoting movement between the open and closed positions. An annular seal 28, preferably of rubber, is located between a circular periphery of the top wall 22 and an inner circumferential surface of the compartment 14. The seal 28, the top wall 22, and the inlet 16 in the closed position are together operative for hermetically sealing the wine 20 in the compartment 14 at each of said elevations "B", "C", or "D".

The aerator 10 further includes an agitator 30 for agitating the hermetically sealed wine 20 with the changed air volume in the compartment 14 for a predetermined time to aerate the wine 20. As illustrated, the agitator 30 includes an ultrasonic transducer in vibration-transmitting relationship with the compartment 14 to non-invasively mix the wine 20 and the air 18 therein, and a control module 32 for controlling a frequency and/or an amplitude and/or a duration of the vibrations. For example, the frequency can be between 20kHz and 85kHz. The duration can be any time period between 1 and five minutes. Pushbuttons 34, 36 can be manually depressed to set the duration to fixed time periods of two and three minutes, respectively. The agitator 30, the control module 32, the pushbuttons 34, 36, and an electrical power cable 38 are all mounted on a base 40 on which the container 12 rests. The base 14 need not be a separate unit as illustrated, but could be integrated with the container 12.

The wine level line 44 and the wine type lines 46, 48, 50 are provided on a side wall of the container 12. The lines can be printed, etched, or otherwise applied directly to the side wall, or they can be provided on an applique or decal 42 that is adhered to the side wall of the container 12. The decal 42 is light-transmissive, as is the container 12, the latter being preferably made of a transparent plastic or glass. Advantageously, the decal 42 is a transparent plastic film.

The decal 42 is shown in isolation in FIG. 2 and the lines 44, 46, 48, and 50 are imprinted and inclined relative to the horizontal. In a preferred embodiment, wine type line 46 corresponds to a light wine, such as Pinot Noir; wine type line 48 corresponds to a medium wine, such as Merlot; and wine type line 50 corresponds to a heavy wine, such as Cabinet Sauvignon.

In use, the inlet 16 is moved to the open position, and a volume of a type of wine to be aerated is admitted to partially fill the compartment 14 up to a wine level. The volume can be one or more servings of wine, or even the entire contents of a wine bottle. The user then closes the inlet 16 and looks at the decal 42 and notes where the wine level crosses the wine level line 44 and thus locates the point "A".

Next, the user sights vertically upwardly from the point "A", and locates the point "B" if the type of the wine 20 in the compartment 14 is a light wine, or locates the point "C" if the type of the wine 20 in the compartment 14 is a medium wine, or locates the point "D" if the type of the wine 20 in the compartment 14 is a heavy wine. The user then moves the top wall 22 until the top wall 22 is at the same elevation as the located point "B", "C", or "D".

By moving the top wall 22, the volume of the air 18 in the compartment 14 is changed. Thus, when the top wall 22 is at the same elevation as point "B", the volume of the air 18 is about 15% of the total volume of the compartment 14; when the top wall 22 is at the same elevation as point "C", the volume of the air 18 is about 22% of the total volume of the compartment 14; and when the top wall 22 is at the same elevation as point "D", the volume of the air 18 is about 30% of the total volume of the compartment 14. The heavier the wine 20, the more air 18 is required to aerate the wine.

Next, one of the pushbuttons 34, 36 is depressed to agitate the wine with the changed air volume. The heavier the wine 20, the longer the duration of the agitation. The use of the ultrasonic transducer 30 is particularly advantageous, because it is fast, and because it does not come in direct contact with the wine 20. Thus, different types of wines are non-invasively agitated with different or variable volumes of air to customize the aerator to the wine being aerated. The inlet 16 can now be re-opened, and the aerated wine poured out of the container 12 for consumption.

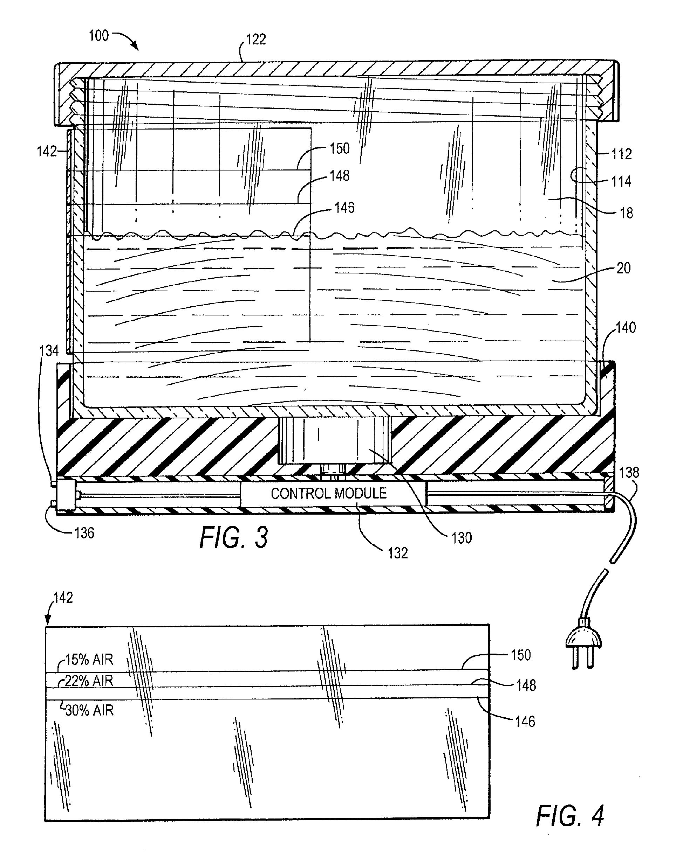

Reference numeral 100 in FIG. 3 generally identifies another embodiment of the wine aerator. The aerator 100 includes a generally cylindrical container 112 having walls bounding an interior compartment 114. A top wall or cover 122 is threadedly mounted on the container 112 and is removable from the illustrated closed condition to an open position in which a quantity or volume of a type of wine 20 to be aerated is admitted to partially fill the compartment 14 up to a variable wine level, as described below. The remainder of the compartment 114 contains a volume of air 18. A plurality of indicators configured as wine type lines 146, 148, 150 in FIG. 4 are provided on the container 112 for visually indicating different air/wine volume ratios based on the type of wine in the compartment 114, as described in detail below.

The aerator 10 further includes an agitator 130, just like agitator 30, a control module 132, just like control module 32, pushbuttons 134, 136, just like pushbuttons 34, 36, a power cable 138, just like cable 38, and a base 140, just like base 40. The wine type lines 146, 148, 150 are provided on a side wall of the container 112. The lines can be printed, etched, or otherwise applied directly to the side wall, or they can be provided on an applique or decal 142 that is adhered to the side wall of the container 112. The decal 142 is light-transmissive, as is the container 112, the latter being preferably made of a transparent plastic or glass. Advantageously, the decal 142 is a transparent plastic film.

The decal 142 is shown in isolation in FIG. 2 and the lines 146, 148, and 150 are imprinted and generally horizontal. In a preferred embodiment, wine type line 150 corresponds to a light wine, such as Pinot Noir; wine type line 148 corresponds to a medium wine, such as Merlot; and wine type line 146 corresponds to a heavy wine, such as Cabinet Sauvignon.

In use, the cover 122 is removed to the open condition, and a volume of a type of wine to be aerated is admitted to partially fill the compartment 114 up to the wine level 150 (corresponding to the volume of the air 18 being about 15% of the total volume of the compartment 114) when the wine 18 is a light wine, or up to the wine level 148 (corresponding to the volume of the air 18 being about 22% of the total volume of the compartment 114) when the wine 18 is a medium wine, or up to the wine level 146 (corresponding to the volume of the air 18 being about 30% of the total volume of the compartment 114) when the wine 18 is a heavy wine. The cover 122 is mounted on the container 112 in the closed condition before agitation is performed. Thus, different types of wines are agitated with different or variable volumes of air to customize the aerator to the wine being aerated. The cover 122 can now be removed, and the aerated wine poured out of the container 112 for consumption.

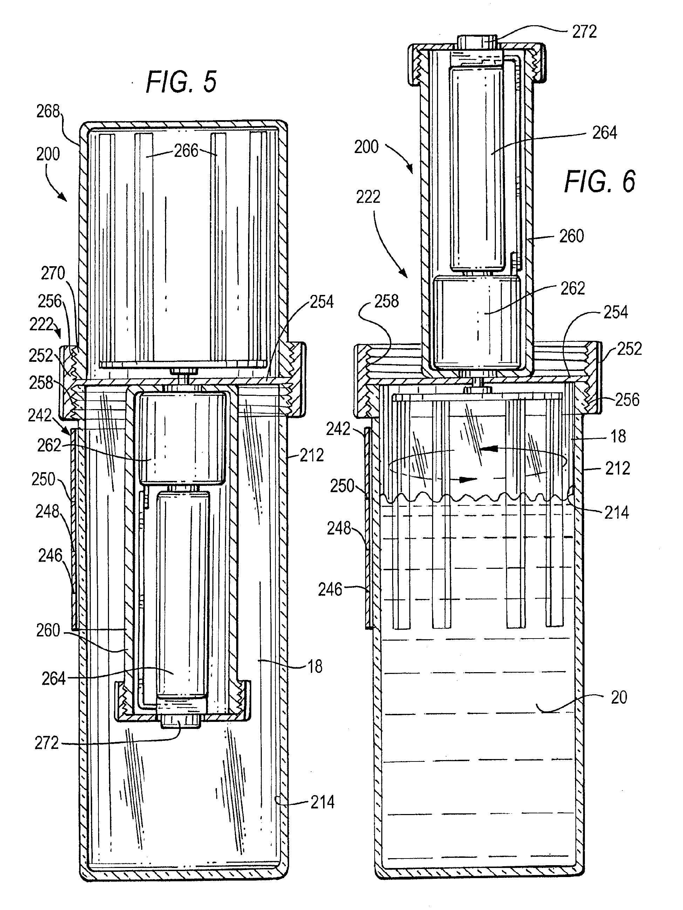

Reference numeral 200 in FIGs. 5-6 generally identifies still another embodiment, preferably a compact, traveller's version, of the wine aerator. The aerator 200 includes a generally cylindrical container 212 having walls bounding an interior compartment 214. A cover assembly 222 is threadedly removably mounted on the container 212. As described below, the cover assembly 222 is mounted on the container 212 in either the storage condition shown in FIG. 5, or is inverted to assume the use condition shown in FIG. 6. When removed from the container 212, the cover assembly 222 has an open condition in which a quantity or volume of a type of wine 20 to be aerated is admitted to partially fill the compartment 214 up to a variable wine level, as described below. The remainder of the compartment 214 contains a volume of air 18.

A plurality of indicators configured as wine type lines 246, 248, 250 are provided on the container 212 for visually indicating different air/wine volume ratios based on the type of wine in the compartment 214. The wine type lines 246, 248, 250 are generally horizontal and are provided on a side wall of the container 212. The lines can be printed, etched, or otherwise applied directly to the side wall, or they can be provided on an applique or decal 242 that is adhered to the side wall of the container 212. The decal 242 is light-transmissive, as is the container 212, the latter being preferably made of a transparent plastic or glass. Advantageously, the decal 242 is a transparent plastic film. In a preferred embodiment, wine type line 250 corresponds to a light wine, such as Pinot Noir; wine type line 248 corresponds to a medium wine, such as Merlot; and wine type line 246 corresponds to a heavy wine, such as Cabinet Sauvignon.

The cover assembly 222 includes an adapter 252 having a top wall 254, a first threaded part 256 at one side of the top wall 254, and a second threaded part 258 at an opposite side of the top wall 254. A housing 260 extends away from one side of the top wall 254. A DC motor 262 and a DC battery 264 are mounted in the housing 260. The motor 262 has a shaft that extends through the top wall 254, and mixer blades 266 are mounted on the motor shaft. A pushbutton switch 272 is mounted on the housing 260.

In the storage condition shown in FIG. 5, the second threaded part 258 of the adaptor 252 is mounted on the container 212 so that the housing 260 is located inside the compartment 214. A cap 268 encloses the mixer blades 266 that are located outside the compartment 214. The cap 268 has a threaded part 270 that engages the first threaded part 256 of the adaptor 252 in the storage condition. In a variant, the mixer blades 266 can be folded down toward the top wall 254 to reduce their height.

In the use condition shown in FIG. 6, the first threaded part 256 of the adaptor 252 is mounted on the container 212 so that the mixer blades 266 are located inside the compartment 214. When the pushbutton 272 is depressed, the DC battery 264 powers the motor 262 and rotates the mixer blades 266 that are immersed directly in the wine 18. In contrast to previous embodiments, the aerator 200 has no power cable, or control module, or base.

In use, the cover assembly 222 is removed to the open condition, and a volume of a type of wine to be aerated is admitted to partially fill the compartment 214 up to the wine level 250 (corresponding to the volume of the air 18 being about 15% of the total volume of the compartment 214) when the wine 18 is a light wine, or up to the wine level 248 (corresponding to the volume of the air 18 being about 22% of the total volume of the compartment 214) when the wine 18 is a medium wine, or up to the wine level 246 (corresponding to the volume of the air 18 being about 30% of the total volume of the compartment 214) when the wine 18 is a heavy wine. As illustrated in FIG. 6, the compartment 214 has been filled up to the wine level 250, after which the pushbutton 272 is depressed, and the mixer blades 266 rotated by the motor 262. Thus, different types of wines are agitated with different or variable volumes of air to customize the aerator to the wine being aerated. The cover assembly 222 can now be removed, and the aerated wine poured out of the container 212 for consumption.

## Claims

1. An aerator (10, 100, 200) for wine (20), comprising:
a container (12, 112, 212) having walls bounding an interior compartment (14, 114, 214), the compartment (14, 114, 214) having an open condition in which a volume of a type of wine (20) to be aerated is admitted to partially fill the compartment (14, 114, 214), and a closed condition for hermetically sealing the wine (20) in the compartment (14, 114, 214), the remainder of the compartment (14, 114, 214) containing a volume of air (18);
a plurality of indicators (46, 48, 50; 146, 148, 150; 246, 248, 250) on the container (12, 112, 212) for visually indicating different air/wine volume ratios based on the type of wine (20) in the compartment (14, 114, 214); and
an agitator (30, 130, 262) for agitating the hermetically sealed wine (20) with a selected one of the ratios for a predetermined time to aerate the wine (20).

2. The wine aerator (10, 100, 200) of claim 1, wherein the indicators (46, 48, 50; 146, 148, 150; 246, 248, 250) are spaced apart at different elevations along an upright axis, and wherein the container (12, 112, 212) has a wall (22) movable along the upright axis among the elevations to select one of the ratios.

3. The wine aerator (10, 100, 200) of claim 2, and a wine level line (44) on the container (12, 112, 212) for visually indicating a wine level of the wine (20) in the compartment (14, 114, 214), and wherein the indicators (46, 48, 50; 146, 148, 150; 246, 248, 250) are wine type lines for visually indicating the different elevations to which the wall (22) is to be moved based on the type of wine (20) in the compartment (14, 114, 214).

4. The wine aerator (10, 100, 200) of claim 2, wherein the compartment (14, 114, 214) has an inner surface; wherein the movable wall (22) has a periphery; and a seal (28) between the periphery of the movable wall (22) and the inner surface of the compartment (14, 114,214).

5. The wine aerator (10, 100, 200) of claim 2, and an inlet (16) mounted on the movable wall (22) for movement between the open and the closed conditions.

6. The wine aerator (10, 100, 200) of claim 1, wherein the indicators (46, 48, 50; 146, 148, 150; 246, 248, 250) are spaced apart at different elevations along an upright axis, and wherein the inlet (16) admits the wine (20) up to different wine levels along the upright axis, each wine level corresponding to a different type of the wine (20), to select one of the ratios.

7. The wine aerator (10, 100, 200) of claim 1, wherein the agitator (30, 130) includes an ultrasonic transducer in vibration-transmitting relationship with the compartment (14, 114, 214) to non-invasively mix the wine (20) and the air (18) therein.

8. The wine aerator (10, 100, 200) of claim 7, wherein the agitator (30, 130) includes a control module (32, 132) for controlling a frequency, an amplitude, or a duration of vibrations generated by the ultrasonic transducer.

9. The wine aerator (10, 100, 200) of claim 8, wherein the agitator (30, 130) includes manually actuatable buttons (34, 36; 134, 136) for setting the duration of the vibrations.

10. The wine aerator (10, 100, 200) of claim 1, wherein the indicators (46, 48, 50; 146, 148, 150) are on a side wall of the container (12, 112, 212).

11. A method of aerating wine (20), comprising:
admitting a volume of a type of wine (20) to be aerated into an interior compartment (14, 114) of a container (12, 112, 212) to partially fill the compartment (14, 114, 214), the remainder of the compartment (14, 114, 214) containing a volume of air (18);
hermetically sealing the wine (20) in the compartment (14, 114);
visually indicating different air/wine volume ratios based on the type of wine (20) in the compartment (14, 114, 214) with a plurality of indicators (46, 48, 50; 146, 148, 150; 246, 248, 250) on the container (12, 112, 212); and
agitating the hermetically sealed wine (20) with a selected one of the ratios for a predetermined time to aerate the wine (20).
